# EUROPEAN PATENT SPECIFICATION

(11) **EP 2 106 954 B1**
(45) Date of publication and mention of the grant of the patent: **22.07.2015**
(21) Application number: 09250503.1
(22) Date of filing: 25.02.2009
(51) Int. Cl.: B60L 11/08, B60L 11/18, B60L 11/14, B60L 11/12, B60L 3/00, B60L 3/04, B60L 9/28

(54) **Traction system of railway car**
Eisenbahnwagenantrieb
Système de traction de wagon de train

(30) Priority: 01.04.2008 JP 2008095081
(43) Date of publication of application: 07.10.2009
(73) Proprietor: Hitachi, Ltd., Chiyoda-ku Tokyo 100-8280 (JP)
(72) Inventor: Kaneko, Takashi, Tokyo 100-8220 (JP); Shimada, Motomi, Tokyo 100-8220 (JP); Toyota, Eiichi, Tokyo 100-8220 (JP)
(74) Representative: Gill, Stephen Charles

(56) References cited:
- EP-A1- 0 646 487
- DE-C1- 19 610 800
- US-A- 5 629 591
- US-A1- 2006 005 736

## Description

### BACKGROUND OF THE INVENTION

### Field of the invention

The present invention relates to a traction system of railway cars, and specifically, relates to the art of driving electric trains by converting AC power to DC power and reconverting the DC power to AC power.

### Description of the related art

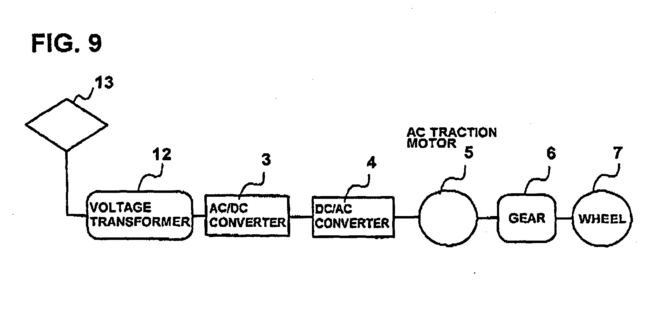

In railway cars traveling onAC-electrified railroad tracks, it is common to adopt a system in which AC power received from a catenary or third rail is converted via an AC/DC converter to DC power, which is then converted via a DC/AC converter into AC power to drive an AC traction motor. FIG. 9 shows a basic configuration of a traction system of an electric train adopting a common traction converter. The AC power entered via a current collector 13 is either reduced or boosted up to predetermined voltage via a voltage transformer 12, and converted via a first power conversion means (AC/DC converter) 3 to DC power. The DC power is then converted via a second power conversion means (DC/AC converter) 4 to AC power, which drives an AC traction motor 5 for rotating wheels 7 via a gear 6 to thereby accelerate the railway car.

Further, with respect to the system illustrated in FIG. 9, a traction system of a railway car capable of running on non-electrified routes is also considered, wherein the railway car is equipped with an engine and an AC generator instead of the current collector 13 and the voltage transformer 12, which is capable of obtaining AC power via the generator driven by the engine.

If the prior art traction converter system illustrated in FIG. 9 is applied to railway cars running on local routes or the like which do not require large transporting capacities, one traction converter should be sufficient per train. However, when such system is adopted, if failure occurs to the AC/DC converter or the DC/AC converter, the train can no longer run by itself, and when such failure occurs to the train on a route in service, the diagram of train operation will be disturbed greatly when the failed car stops to operate. Further, if the car comes to a standstill in a tunnel or on a bridge, it becomes impossible to unload the passengers from the cars, and other problems will occur from the viewpoint of safety.

The above-mentioned problem can be solved by enhancing the redundancy of the system by decentralizing AC/DC converters and DC/AC converters, but such configuration causes significant increase of cost and size of the system, and in some cases, it is impossible to secure the installation space for components, so it was difficult to realize such redundant system.

US 2006/0005736 proposes an energy management system for use with a hybrid energy off highway vehicle.

### SUMMARY OF THE INVENTION

The present invention provides a traction system of a railway car having a traction converter, capable of running independently by itself without causing a standstill even when failure occurs to either the AC/DC converter or the DC/AC converter, thereby enabling to minimize the disturbance of diagram of the train operation.

Accordingly, the present invention provides a traction system of a railway car according to claim 1 or 2.

The present invention is realized by a traction system of a railway car having a traction converter, comprising a storage system connected to a DC link between an AC/DC converter and a DC/AC converter, and a selector for switching an AC-side circuit of the AC/DC converter and the DC/AC converter, wherein if either one of the AC/DC converter or the DC/AC converter fails, the healthy AC/DC converter or the DC/AC converter is operated as converter to store energy in the storage system, wherein when a demand to accelerate the railway car is provided, the healthy one of the AC/DC converter or the DC/AC converter is operated as DC/AC converter, in order to drive the AC traction motor by using the stored energy.

As described, the present invention provides a traction converter system capable of driving a railway car via combination of a first power conversion means (AC/DC converter) and a second powerconversionmeans (DC/AC converter), wherein even if failure occurs to either one of the first power conversion means (AC/DC converter) or the second power conversion means (DC/AC converter), the healthy-operating power conversion means is used to selectively perform a charging operation of the storage system via an AC/DC converting operation and an accelerating operation via a DC/AC converting operation, to thereby continue self-running operation of the railway car. As a result, it becomes possible to minimize the disturbance of the train operation diagram when failure occurs to the system, and to prevent standstill of the train in tunnels or on bridges, thereby providing a safe traction system of railway cars.

### BRIEF DESCRIPTION OF THE DRAWINGS

FIG. 1 shows a basic configuration of a traction system of a railway car according to a first embodiment of the present invention;
FIG. 2 shows a configuration of a controller according to the first embodiment of the present invention;
FIG. 3 is an explanatory view of a normal accelerating operation according to the first embodiment of the present invention;
FIG. 4 is an explanatory view of a charging operation for charging a storage system when failure of DC/AC converter occurs according to the first embodiment of the present invention;
FIG. 5 is an explanatory view of an acceleration operation when failure of DC/AC converter occurs according to the first embodiment of the present invention;
FIG. 6 is an explanatory view of a charging operation for charging a storage system when failure of AC/DC converter occurs according to the first embodiment of the present invention;
FIG. 7 is an explanatory view of an acceleration operation when failure of AC/DC converter occurs according to the first embodiment of the present invention;
FIG. 8 illustrates a second embodiment of the preset invention; and
FIG. 9 is a view showing the basic configuration of an electric car according to the prior art.

### DETAILED DESCRIPTION OF THE PREFERRED EMBODIMENTS

Now, the preferred embodiments of a traction system of a railway car according to the present invention will be described with reference to the drawings.

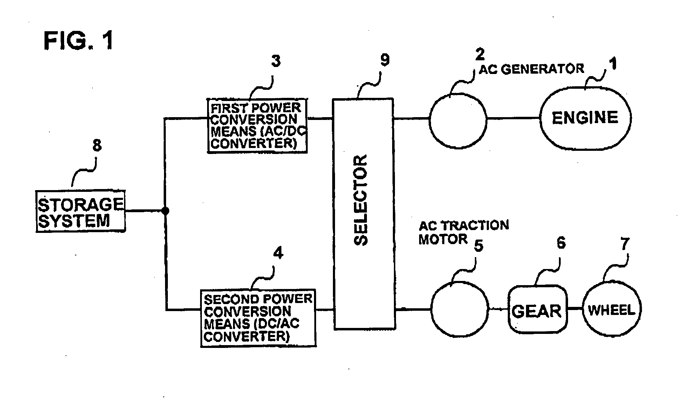

FIG. 1 is a view showing the basic configuration of a first preferred embodiment of the present invention in a traction system of a railway car according to the present invention. The present traction system of a railway car is composed of an engine 1, an AC generator 2 driven by the engine 1, a selector 9, a first power conversion means 3 capable of mutually converting AC power and DC power and normally operating as anAC/DC converter, a second power conversion means 4 capable of mutually converting AC power and DC power and normally operating as a DC/AC converter, an AC traction motor 5, a gear 6, wheels 7 and a storage system 8.

The engine 1 outputs a torque based on a demand from a control system not shown. The AC generator 2 receives the torque from engine 1, converts this mechanical power into AC electric power. The selector 9 normally connects the AC generator 2 to the input of the first power conversion means (AC/DC converter) 3. The first power conversion means (AC/DC converter) 3 receives input of the AC power output from the AC generator 2, converts the same into DC power and outputs the same. The second power conversion means (DC/AC converter) 4 receives input of the DC power output from the first power conversion means (AC/DC converter) 3, converts the same into AC power and outputs the same. The selector 9 normally connects an AC traction motor 5 to the output of the second power conversion means (DC/AC converter) 4. The AC traction motor 5 receives input of the AC power output from the second power conversion means (DC/AC converter) 4, converts the same into torque and outputs the same. The gear 6 amplifies the torque output of the AC traction motor 5 by reducing the number of rotations and outputs the same to drive the wheels 7 and to accelerate or decelerate the railway car.

The storage system 8 is connected so as to receive input of DC power from a DC link between the first power conversion means (AC/DC converter) 3 and the second power conversion means (DC/AC converter) 4, or to output DC power to the DC link between the first power conversion means (AC/DC converter) 3 and the second power conversion means (DC/AC converter) 4. The following operation is made possible by this configuration.

If an acceleration demand is provided to the railway car when the system is normal, the AC power obtained via the engine 1 and the generator 2 is converted into DC power via the first power conversion means 3 operating as an AC/DC converter. The second power conversion means 4 operating as a DC/AC converter outputs AC power based on the above-mentioned DC power and the DC power stored in the storage system 8, so as to drive the AC traction motor 5 and provide tractive effort to the wheels 7 via the gear 6.

On the other hand, when a deceleration demand is provided to the railway car, the AC tractionmotor 5 is operated as generator, and the generated AC power is converted to DC power by operating the second power conversion means 4 as an AC/DC converter. The DC power is either recovered in the storage system 8 or converted into AC power by operating the first power conversion means 3 as a DC/AC converter, and the AC generator 2 is operated as a motor so as to drive the engine from the generator side to activate an engine brake, by which the wheels 7 obtain braking effort and the railway car decelerates.

Next, we will describe an operation corresponding to the case where failure occurs to the first power conversion means (AC/DC converter) 3 or the second power conversion means (DC/AC converter) 4.

In FIG. 1, normally, the first power conversion means 3 operating as an AC/DC converter and the second power conversion means 4 operating as a DC/AC converter are respectively connected via the selector 9 to the AC generator 2 and the AC traction motor 5. When failure occurs to either the first power conversion means (AC/DC converter) 3 or the second power conversion means (DC/AC converter) 4 (at time of failure), the selector 9 is operated, and the AC traction motor 5 is connected to the first power conversion means 3 and the AC generator 2 is connected to the second power conversion means 4. Since the first power conversion means 3 and the second power conversion means 4 can have both function as an AC/DC converter and a DC/AC converter, when failure occurs to either the first power conversion means 3 or the second power conversion means 4, the healthy-operating power conversion means is connected to the AC generator 2, which is used as an AC/DC converter to charge the storage system 8. When an acceleration demand is provided to the railway car, the healthy-operating power conversion means is connected to the AC traction motor 5, which is operated as a DC/AC converter to drive the AC traction motor 5 via the energy stored in the storage system 8 so as to accelerate the railway car.

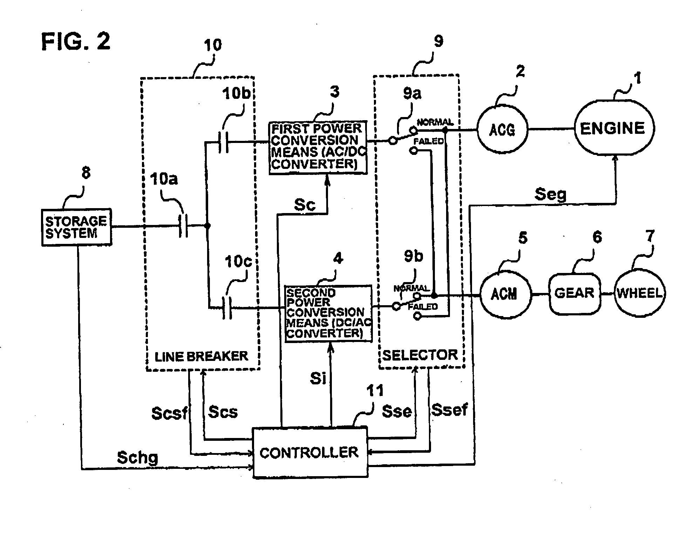

FIG. 2 is a view showing the configuration of a controller according to the first embodiment of the present invention. The engine 1 outputs a torque based on a demand Seg from a controller 11. The AC generator 2 receives the torque from the engine 1, converts this mechanical power into AC electric power.

The selector 9 is composed of two sets of selectors 9a and 9b, and performs selecting operation based on a switching demand Sse from the controller 11. The controller 11 monitors a status signal Ssef of the selector 9, and performs selection of various control operations after confirming that the switching operation has been completed. During normal operation, an AC/DC converter control demand Sc is provided to the first power conversion means (AC/DC converter) 3, wherein the first power conversion means (AC/DC converter) 3 receives the AC power output from the AC generator 2 as input, converts the same into DC power and outputs the same.

A control demand Si is provided to the second power conversion means (DC/AC converter) 4, wherein the second power conversion means (DC/AC converter) 4 receives DC power obtained from the first power conversion means (AC/DC converter) 3 and the storage system 8 as input, converts the same into AC power and outputs the same.

The AC traction motor 5 receives the AC power output from the second power conversion means (DC/AC converter) 4 as input, converts the same into torque and outputs the same. The gear 6 amplifies the torque output of the AC tractionmotor 5 by reducing the number of rotations and outputs the same, so as to drive the axles 7 and accelerate or decelerate the railway car.

The controller 11 controls the system based on a state of charge signal Schg of the storage system 8. It is also possible to obtain the state of storage from the input/output current of the storage system and the DC link voltage, instead of the state of charge signal Schg of the storage system.

A line breaker 10 is provided for disconnecting the circuit between the first power conversion means (AC/DC converter) 3, the second power conversion means (DC/AC converter) 4 and the storage system 8. When failure occurs to any one of the first power conversion means (AC/DC converter) 3, the second power conversion means (DC/AC converter) 4 or the power storage system 8, the line breaker connected to that failed device can be disconnected based on a line breaker operation demand Scs from the controller. The controller 11 monitors the status signal Scsf of the line breaker and controls the system. Further, in FIG. 2, the selectors 9a and 9b are illustrated as single-contactor switches, but actually, they require a number of contactors corresponding to the number of phase of the AC traction motor 5. Further, the selectors 9a and 9b can be interlocked, or the status signal Ssef of the selector 9 can be omitted.

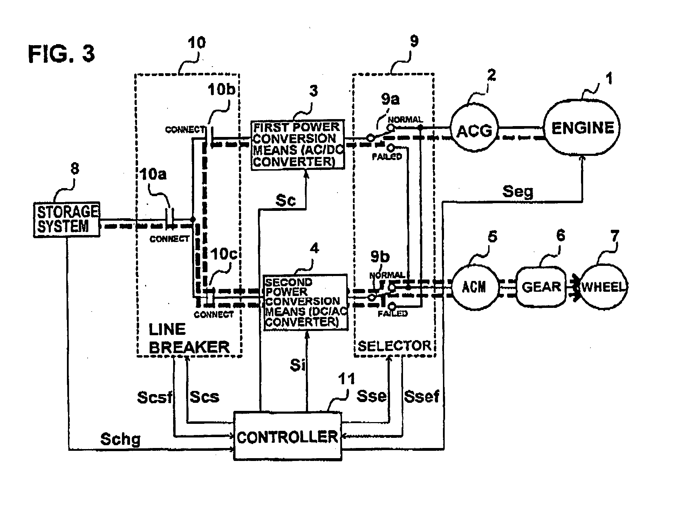

Now, we will describe an example of the actual operation according to the present invention. FIG. 3 is a view showing the state according to the configuration of FIG. 2 in which the railway car is performing a normal accelerating operation. In FIG. 3, the selector 9a is at "normal" position, and the AC power obtained from the engine 1 and the AC generator 2 is entered to the first power conversion means (AC/DC converter) 3. All the line breakers are at "connect" state, and the DC power converted via the first power conversion means (AC/DC converter) 3 is entered to the second power conversion means (DC/AC converter) 4, where it is reconverted to AC power.

Further, if the power necessary to accelerate the railway car cannot be sufficiently obtained from the DC power output from the first power conversion means (AC/DC converter) 3, DC power is complemented from the storage system 8. The selector 9b is at "normal" position, and the AC power output from the second power conversion means (DC/AC converter) 4 is output to the AC traction motor 5, and the AC traction motor 5 drives the wheels 7 via the gear 6 to accelerate the railway car.

Next, we will describe the operation to be performed when failure occurs to the first power conversion means (AC/DC converter) 3 or the second power conversion means (DC/AC converter) 4.

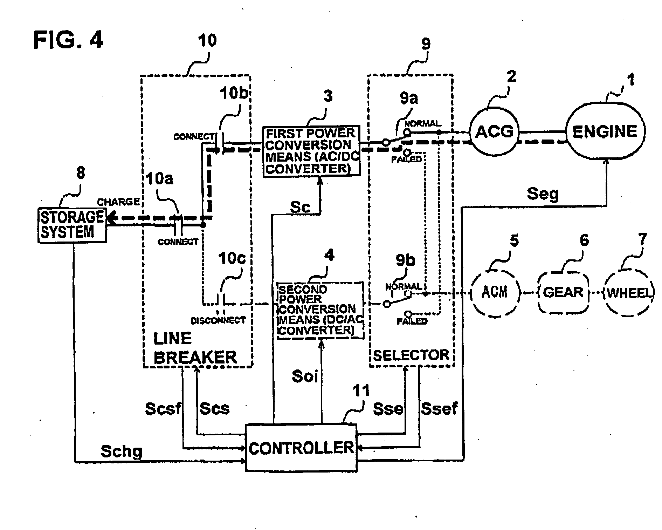

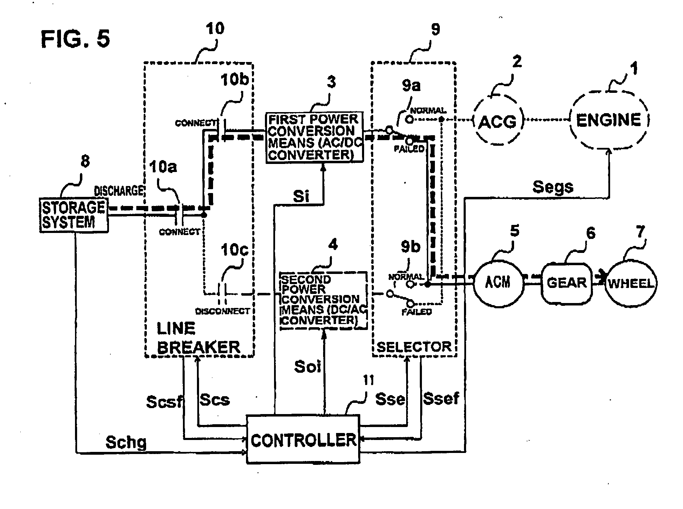

At first, the operation when failure occurs to the second power conversion means (DC/AC converter) 4 in FIG. 3 will be described with reference to FIGS. 4 and 5. FIG. 4 illustrates a charging operation of the storage system when failure occurs to the second power conversion means (DC/AC converter) 4 in FIG. 3 and the amount of charge of the storage system 8 is at an insufficient state. FIG. 5 illustrates an acceleration operation when failure occurs to the second power conversion means (DC/AC converter) 4 and the amount of charge of the storage system 8 is sufficient.

In FIG. 4, the controller 11 outputs a demand Seg to the engine 1 based on the state of charge signal Schg from the storage system 8 until the storage system 8 is at a state of charge capable of accelerating the railway car, and outputs a converter control demand Sc to the first power conversion means (AC/DC converter) 3. As a result, the storage unit 8 can be charged via the route illustrated by the dashed arrow line of FIG. 4 connecting the engine 1, the AC generator 2, the selector 9a, the fist power conversion means (AC/DC converter) 3, the line breaker 10b, the line breaker 10a and the storage system 8. At this time, the line breaker 10c is set to "disconnect", and a DC/AC converter no-control demand Soi is output to the second power conversion means (DC/AC converter) 4 so that the second power conversion means (DC/AC converter) 4 will not operate.

In FIG. 5, when an acceleration demand is provided to the railway car when the storage system 8 is at a state of charge sufficient to accelerate the railway car, the controller 11 switches the selector switch 9a to a "failed" side via a demand Sse. Next, the controller 11 outputs a DC/AC converter control demand Si to the first power conversion means (AC/DC converter) 3 and drives the AC tractionmotor 5. At this time, the controller 11 outputs a demand Segs to the engine 1 and brings the engine to either a stop or an idling state. As a result, the accumulated energy in the storage system 8 is converted to tractive effort of the wheels 7 to accelerate the railway car in the route illustrated by the dashed arrow line of FIG. 5 connecting the storage system 8, the line breaker 10a, the line breaker 10b, the first power conversion means (DC/AC converting operation) 3, the selector 9a, the AC traction motor 5, the gear 6 and the wheel 7.

The amount of charge of the storage system 8 is gradually reduced by the accelerating operation, and at some point of time the acceleration becomes impossible, but if further accelerating is necessary, charging of the storage system 8 is performed via the operation illustrated in FIG. 4, according to which further acceleration becomes possible. As described, according to FIG. 3, even if failure occurs to the second power conversion means (DC/AC converter) 4, standstill of the railway car can be prevented by using the first power conversion means (AC/DC converter) 3 to perform either AC/DC converting operation or DC/AC converting operation.

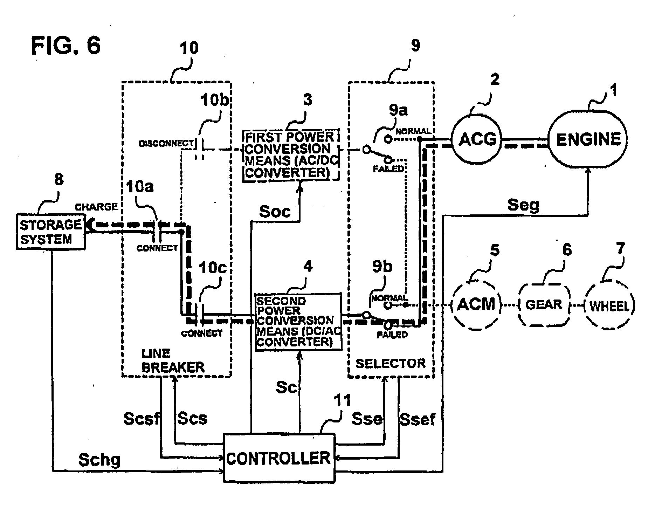

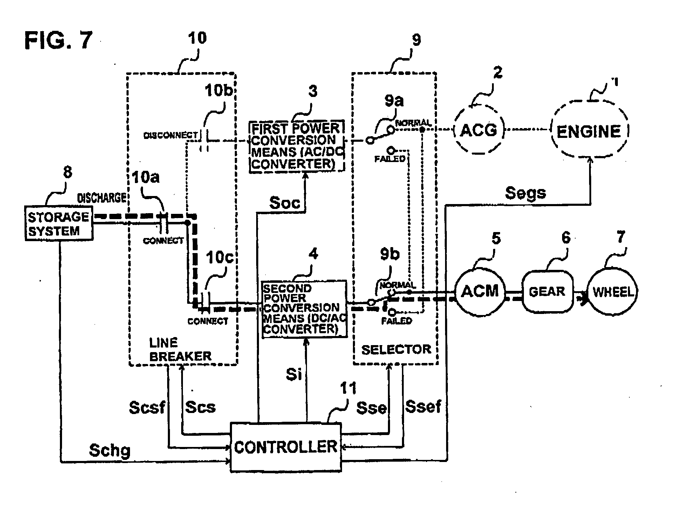

Next, with reference to FIGS. 6 and 7, the operation when failure occurs to the first power conversion means (AC/DC converter) 3 in FIG. 3 will be described. FIG. 6 illustrates a charging operation of the storage system when failure occurs to the first power conversion means (AC/DC converter) 3 in FIG. 3 and the amount of charge of the storage system 8 is insufficient. FIG. 7 illustrates an accelerating operation when failure occurs to the first power conversion means (AC/DC converter) 3 in FIG. 3 when the state of charge of the storage system 8 is sufficient.

In FIG. 6, the controller 11 switches the selector switch 9a to a "failed" side when the state of charge of the storage system 8 reaches a state where acceleration of the railway car is possible based on the state of charge signal Schg from the storage system 8, outputs a demand Seg to the engine 1, and outputs a converter control demand Sc to the second power conversion means (DC/AC converter) 4. As a result, the storage system 8 is charged via the route shown by the dashed arrow line of FIG. 6 connecting the engine 1, the AC generator 2, the selector 9a, the second power conversion means (AC/DC converting operation) 4, the line breaker 10c, the line breaker 10a and the storage system 8. At this time, the line breaker 10b is set to "disconnect", and an AC/DC converter no-control demand Soc is output to the first power conversion means (AC/DC converter) 3 so that the first power conversion means (AC/DC converter) 3 will not operate.

In FIG. 7, when a demand to accelerate the railway car is provided when the storage system 8 is at a state of charge sufficient to accelerate the railway car, the controller 11 switches the selector switch 9a to "normal" side based on demand Sse. Next, the controller 11 outputs a DC/AC control demand Si to the second power conversion means (DC/AC converting operation) 4, and drives the AC traction motor 5. Further, the controller 11 outputs a demand Segs to the engine 1, and brings the engine to a stop or an idling state. As a result, the accumulated energy in the storage system 8 is converted to tractive effort of the wheels 7 to accelerate the railway car in the route illustrated by the dashed arrow line of FIG. 7 connecting the storage system 8, the line breaker 10a, the line breaker 10c, the second power conversion means (DC/AC converting operation) 4, the selector 9b, the AC traction motor 5, the gear 6 and the wheel 7.

The amount of charge of the storage system 8 is gradually reduced by the accelerating operation, and at some point of time the acceleration becomes impossible, but if further acceleration is necessary, charging of the storage system 8 is performed by the operation illustrated in FIG. 6, according to which further acceleration becomes possible. As described, according to FIG. 3, even if failure occurs to the first power conversion means (AC/DC converter) 3, standstill of the railway car can be prevented by using the second power conversion means (DC/AC converter) 4 to perform either AC/DC converting operation or DC/AC converting operation.

As described, according to the present invention, even if failure occurs to either the first power conversion means (AC/DC converter) or the second power conversion means (DC/AC converter), the healthy-operating power conversion means can be switched and used to perform both charging operation of the storage system via an AC/DC converting operation and an accelerating operation via a DC/AC converting operation, to thereby enable continuous self-running operation of the railway car.

In the actual operation of the railway car, by performing the charging operation of the storage system illustrated in FIG. 4 or FIG. 6 while the railway car is at a stopped state or is coasting, it becomes possible to minimize the delay of the train operation from the diagram and to suppress the disruption of train operation.

Further, even if an acceleration demand is provided, if the amount of charge of the storage system is reduced to a revel where no further acceleration operation is impossible, the healthy-operating power conversion means can be used to stop the DC/AC conversion operation and to perform AC/DC conversion operation to charge the storage system, so as to suppress the delay in train operation.

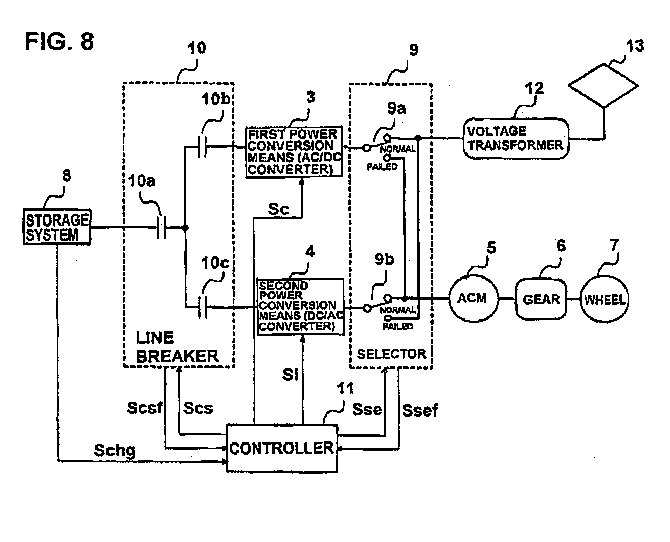

FIG. 8 shows a second embodiment of the traction system of a railway car according to the present invention. The engine 1 and the AC generator 2 of the embodiment illustrated in FIG. 3 is replaced with a current collector 13 and a voltage transformer 12. The present invention can be applied to an electric train system obtaining power via a catenary and third rail, wherein when failure occurs to either the first power conversion means (AC/DC converter) 3 or the second power conversion means (DC/AC converter) 4, the healthy-operating power conversion means of either the first power conversion means (AC/DC converter) 3 or the second power conversion means (DC/AC converter) 4 is used to perform AC/DC converting operation or DC/AC converting operation, so as to prevent standstill of the railway car.

## Claims

1. A traction system of a railway car comprising an AC generator means (2) driven by an engine (1), a first power conversion means (3) connected to the AC generator means and capable of mutually converting power between AC power and DC power, an AC traction motor (5), a second power conversion means (4) connected to the AC traction motor and capable of mutually converting power between AC power and DC power, and a storage system (8) connected to a DC-side of the two power conversion means,
**characterised in that** the traction system of a railway car further comprises two selectors (9a, 9b) corresponding to the first and second power conversion means for mutually switching an AC-side device of the two power conversion means, and three line breakers (10a, 10b, 10c) for disconnecting the circuit between the first power conversion means, the second power conversion means and the storage system, wherein:
in case failure occurs to the second power conversion means and the amount of charge of the storage system is at an insufficient state, the system is configured to disconnect one of the three line breakers (10c) corresponding to the second power conversion means, and to connect the first power conversion means and the AC generator means by the selector (9a) of the first conversion means,
in case failure occurs to the second power conversion means and the amount of charge of the storage system is at a sufficient state, the system is configured to disconnect one of the three line breakers (10c) corresponding to the second power conversion means, and to connect the first power conversion means and the AC traction motor by the selector (9a) of the first conversion means,
in case failure occurs to the first power conversion means and the amount of charge of the storage system is at an insufficient state, the system is configured to disconnect another line breaker (10b) corresponding to the first power conversion means, and to connect the second power conversion means and the AC generator means by the selector (9b) of the second conversion means, and
in case failure occurs to the first power conversion means and the amount of charge of the storage system is at a sufficient state, the system is configured to disconnect another line breaker (10b) corresponding to the first power conversion means, and to connect the second power conversion means and the AC traction motor by the selector (9b) of the second conversion means;
such that the system is able to store energy in the storage system via a healthy-operating power conversion means when either one of the two power conversion means fails, and to drive the AC traction motor using the stored energy.

2. A traction system of a railway car comprising a current collector (13) for collecting AC power from a catenary or third rail, a first power conversion means (3) connected to the current collector and capable of mutually converting power between AC power and DC power, an AC traction motor (5), a second power conversion means (4) connected to the AC traction motor and capable of mutually converting power between AC power and DC power, and a storage system (8) connected to a DC-side of the two power conversion means,
**characterised in that** the traction system of a railway car further comprises two, selectors (9a, 9b) corresponding to the first and second power conversion means for mutually switching an AC-side device of the two power conversion means, and three line breakers (10a, 10b, 10c) for disconnecting the circuit between the first power conversion means, the second power conversion means and the storage system, wherein: in case failure occurs to the second power conversion means and the amount of charge of the storage system is at an insufficient state, the system is configured to disconnect one of the three line breakers (10c) corresponding to the second power conversion means, and to connect the first power conversion means and the current collector by the selector (9a) of the first conversion means,
in case failure occurs to the second power conversion means and the amount of charge of the storage system is at a sufficient state, the system is configured to disconnect one of the three line breakers (10c) corresponding to the second power conversion means, and to connect the first power conversion means and the AC traction motor by the selector (9a) of the first conversion means,
in case failure occurs to the first power conversion means and the amount of charge of the storage system is at an insufficient state, the system is configured to disconnect another line breaker (10b) corresponding to the first power conversion means, and to connect the second power conversion means and the current collector by the selector (9b) of the second conversion means, and
in case failure occurs to the first power conversion means and the amount of charge of the storage system is at a sufficient state, the system is configured to disconnect another line breaker (10b) corresponding to the first power conversion means, and to connect the second power conversion means and the AC traction motor by the selector (9b) of the second conversion means;
such that the system is able to store energy in the storage system via a healthy-operating power conversion means when either one of the two power conversion means fails, and to drive the AC traction motor using the stored energy.

## Patentansprüche

1. Antriebssystem eines Eisenbahnwaggons, umfassend eine von einem Antrieb (1) angetriebene Wechselstromerzeugereinrichtung (2), eine mit der Wechselstromerzeugereinrichtung verbundene erste Stromumwandlungseinrichtung (3), die zur wechselseitigen Stromumwandlung zwischen Wechselstrom und Gleichstrom fähig ist, einen Wechselstromantriebsmotor (5), eine mit dem Wechselstromantriebsmotor verbundene zweite Stromumwandlungseinrichtung (4), die zur wechselseitigen Stromumwandlung zwischen Wechselstrom und Gleichstrom fähig ist, und ein mit einer Gleichstromseite der zwei Stromumwandlungseinrichtungen verbundenes Speichersystem (8),
**gekennzeichnet dadurch, dass** das Antriebssystem eines Eisenbahnwaggons ferner zwei Auswahleinrichtungen (9a, 9b), die der ersten und der zweiten Stromumwandlungseinrichtung zum wechselseitigen Schalten eines Wechselstromseitengeräts der zwei Stromumwandlungseinrichtungen entsprechen, und drei Leitungsausschalter (10a, 10b, 10c) zum Unterbrechen der Schaltung zwischen der ersten Stromumwandlungseinrichtung, der zweiten Stromumwandlungseinrichtung und dem Speichersystem umfasst, wobei:
falls ein Fehler bei der zweiten Stromumwandlungseinrichtung auftritt und die Ladungsmenge des Speichersystems in einem unzureichenden Zustand ist, das System dazu eingerichtet ist, einen der drei Leitungsausschalter (10c), der der zweiten Stromumwandlungseinrichtung entspricht, zu unterbrechen und die erste Stromumwandlungseinrichtung und die Wechselstromerzeugereinrichtung durch die Auswahleinrichtung (9a) der ersten Stromumwandlungseinrichtung zu verbinden,
falls ein Fehler bei der zweiten Stromumwandlungseinrichtung auftritt und die Ladungsmenge des Speichersystems in einem ausreichenden Zustand ist, das System dazu eingerichtet ist, einen der drei Leitungsausschalter (10c), der der zweiten Stromumwandlungseinrichtung entspricht, zu unterbrechen und die erste Stromumwandlungseinrichtung und den Wechselstromantriebsmotor durch die Auswahleinrichtung (9a) der ersten Stromumwandlungseinrichtung zu verbinden,
falls ein Fehler bei der ersten Stromumwandlungseinrichtung auftritt und die Ladungsmenge des Speichersystems in einem unzureichenden Zustand ist, das System dazu eingerichtet ist, einen anderen Leitungsausschalter (10b), der der ersten Stromumwandlungseinrichtung entspricht, zu unterbrechen und die zweite Stromumwandlungseinrichtung und die Wechselstromerzeugereinrichtung durch die Auswahleinrichtung (9b) der zweiten Stromumwandlungseinrichtung zu verbinden, und
falls ein Fehler bei der ersten Stromumwandlungseinrichtung auftritt und die Ladungsmenge des Speichersystems in einem ausreichenden Zustand ist, das System dazu eingerichtet ist, einen anderen Leitungsausschalter (10b), der der ersten Stromumwandlungseinrichtung entspricht, zu unterbrechen und die zweite Stromumwandlungseinrichtung und den Wechselstromantriebsmotor durch die Auswahleinrichtung (9b) der zweiten Stromumwandlungseinrichtung zu verbinden;
sodass das System dazu in der Lage ist, im Speichersystem über eine ordnungsgemäß funktionierende Stromumwandlungseinrichtung Energie zu speichern, wenn eine der zwei Stromumwandlungseinrichtungen versagt, und den Wechselstromantriebsmotor unter Verwendung der gespeicherten Energie anzutreiben.

2. Antriebssystem eines Eisenbahnwaggons, umfassend einen Stromabnehmer (13) zum Abnehmen von Wechselstrom von einer Fahrleitung oder einer dritten Schiene, eine mit dem Stromabnehmer verbundene erste Stromumwandlungseinrichtung (3), die zur wechselseitigen Stromumwandlung zwischen Wechselstrom und Gleichstrom fähig ist, einen Wechselstromantriebsmotor (5), einen mit dem Wechselstromantriebsmotor verbundene zweite Stromumwandlungseinrichtung (4), die zur wechselseitigen Stromumwandlung zwischen Wechselstrom und Gleichstrom fähig ist, und ein mit einer Gleichstromseite der zwei Stromumwandlungseinrichtungen verbundenes Speichersystem (8),
**gekennzeichnet dadurch, dass** das Antriebssystem eines Eisenbahnwaggons ferner zwei Auswahleinrichtungen (9a, 9b), die der ersten und der zweiten Stromumwandlungseinrichtung zum wechselseitigen Schalten eines Wechselstromseitengeräts der zwei Stromumwandlungseinrichtungen entsprechen, und drei Leitungsausschalter (10a, 10b, 10c) zum Unterbrechen der Schaltung zwischen der ersten Stromumwandlungseinrichtung, der zweiten Stromumwandlungseinrichtung und dem Speichersystem umfasst, wobei:
falls ein Fehler bei der zweiten Stromumwandlungseinrichtung auftritt und die Ladungsmenge des Speichersystems in einem unzureichenden Zustand ist, das System dazu eingerichtet ist, einen der drei Leitungsausschalter (10c), der der zweiten Stromumwandlungseinrichtung entspricht, zu unterbrechen und die erste Stromumwandlungseinrichtung und den Stromabnehmer durch die Auswahleinrichtung (9a) der ersten Stromumwandlungseinrichtung zu verbinden,
falls ein Fehler bei der zweiten Stromumwandlungseinrichtung auftritt und die Ladungsmenge des Speichersystems in einem ausreichenden Zustand ist, das System dazu eingerichtet ist, einen der drei Leitungsausschalter (10c), der der zweiten Stromumwandlungseinrichtung entspricht, zu unterbrechen und die erste Stromumwandlungseinrichtung und den Wechselstromantriebsmotor durch die Auswahleinrichtung (9a) der ersten Stromumwandlungseinrichtung zu verbinden,
falls ein Fehler bei der ersten Stromumwandlungseinrichtung auftritt und die Ladungsmenge des Speichersystems in einem unzureichenden Zustand ist, das System dazu eingerichtet ist, einen anderen Leitungsausschalter (10b), der der ersten Stromumwandlungseinrichtung entspricht, zu unterbrechen und die zweite Stromumwandlungseinrichtung und den Stromabnehmer durch die Auswahleinrichtung (9b) der zweiten Stromumwandlungseinrichtung zu verbinden, und
falls ein Fehler bei der ersten Stromumwandlungseinrichtung auftritt und die Ladungsmenge des Speichersystems in einem ausreichenden Zustand ist, das System dazu eingerichtet ist, einen anderen Leitungsausschalter (10b), der der ersten Stromumwandlungseinrichtung entspricht, zu unterbrechen und die zweite Stromumwandlungseinrichtung und den Wechselstromantriebsmotor durch die Auswahleinrichtung (9b) der zweiten Stromumwandlungseinrichtung zu verbinden;
sodass das System dazu in der Lage ist, im Speichersystem über eine ordnungsgemäß funktionierende Stromumwandlungseinrichtung Energie zu speichern, wenn eine der zwei Stromumwandlungseinrichtungen versagt, und den Wechselstromantriebsmotor unter Verwendung der gespeicherten Energie anzutreiben.

## Revendications

1. Système de traction d'un véhicule ferroviaire, comprenant des moyens de générateur de courant alternatif (2) entraînés par un moteur (1), des premiers moyens de conversion de puissance (3) reliés aux moyens de générateur de courant alternatif et capables de convertir mutuellement une puissance entre une puissance de courant alternatif et une puissance de courant continu, un moteur de traction par courant alternatif (5), des seconds moyens de conversion de puissance (4) reliés au moteur de traction par courant alternatif et capables de convertir mutuellement une puissance entre une puissance de courant alternatif et une puissance de courant continu, et un système de stockage (8) relié à un côté de courant continu des deux moyens de conversion de puissance,
**caractérisé en ce que** le système de traction d'un véhicule ferroviaire comporte en outre deux sélecteurs (9a, 9b) correspondant aux premiers et seconds moyens de conversion de puissance pour commuter mutuellement un dispositif du côté du courant alternatif des deux moyens de conversion de puissance, et trois coupeurs de ligne (10a, 10b, 10c) pour déconnecter le circuit entre les premiers moyens de conversion de puissance, les seconds moyens de conversion de puissance et le système de stockage, dans lequel :
dans le cas où une défaillance survient dans les seconds moyens de conversion de puissance et que la quantité de charge du système de stockage est dans un état insuffisant, le système est configuré pour déconnecter l'un des trois coupeurs de ligne (10c) correspondant aux seconds moyens de conversion de puissance, et pour connecter les premiers moyens de conversion de puissance et les moyens de générateur de courant alternatif par l'intermédiaire du sélecteur (9a) des premiers moyens de conversion,
dans le cas où une défaillance survient dans les seconds moyens de conversion de puissance et que la quantité de charge du système de stockage est dans un état insuffisant, le système est configuré pour déconnecter l'un des trois coupeurs de ligne (10c) correspondant aux seconds moyens de conversion de puissance, et pour connecter les premiers moyens de conversion de puissance et le moteur de traction par courant alternatif par l'intermédiaire du sélecteur (9a) des premiers moyens de conversion,
dans le cas où une défaillance survient dans les premiers moyens de conversion de puissance et que la quantité de charge du système de stockage est dans un état insuffisant, le système est configuré pour déconnecter un autre coupeur de ligne (10b) correspondant aux premiers moyens de conversion de puissance, et pour connecter les seconds moyens de conversion de puissance et les moyens de générateur de courant alternatif par l'intermédiaire du sélecteur (9b) des seconds moyens de conversion, et
dans le cas où une défaillance survient dans les premiers moyens de conversion de puissance et que la quantité de charge du système de stockage est dans un état suffisant, le système est configuré pour déconnecter un autre coupeur de ligne (10b) correspondant aux premiers moyens de conversion de puissance, et pour connecter les seconds moyens de conversion de puissance et le moteur de traction par courant alternatif par l'intermédiaire du sélecteur (9b) des seconds moyens de conversion,
de sorte que le système est en mesure de stocker de l'énergie dans le système de stockage via des moyens de conversion de puissance fonctionnant de manière saine lorsque l'un ou l'autre des deux moyens de conversion de puissance connaît une défaillance, et pour entraîner le moteur de traction par courant alternatif en utilisant l'énergie stockée.

2. Système de traction d'un véhicule ferroviaire comportant un collecteur de courant (13) pour collecter une puissance en courant alternatif depuis un caténaire ou un rail de contact, des premiers moyens de conversion de puissance (3) reliés au collecteur de courant et capables de convertir mutuellement une puissance entre une puissance de courant alternatif et une puissance de courant continu, un moteur de traction par courant alternatif (5), des seconds moyens de conversion de puissance (4) reliés au moteur de traction par courant alternatif et capables de convertir mutuellement une puissance entre une puissance de courant alternatif et une puissance de courant continu, et un système de stockage (8) relié à un côté de courant continu des deux moyens de conversion de puissance,
**caractérisé en ce que** le système de traction d'un véhicule ferroviaire comporte en outre deux sélecteurs (9a, 9b) correspondant aux premiers et seconds moyens de conversion de puissance pour commuter mutuellement un dispositif du côté du courant alternatif des deux moyens de conversion de puissance, et trois coupeurs de ligne (10a, 10b, 10c) pour déconnecter le circuit entre les premiers moyens de conversion de puissance, les seconds moyens de conversion de puissance et le système de stockage, dans lequel : dans le cas où une défaillance survient dans les seconds moyens de conversion de puissance et que la quantité de charge du système de stockage est dans un état insuffisant, le système est configuré pour déconnecter l'un des trois coupeurs de ligne (10c) correspondant aux seconds moyens de conversion de puissance, et pour connecter les premiers moyens de conversion de puissance et les moyens de générateur de courant alternatif par l'intermédiaire du sélecteur (9a) des premiers moyens de conversion,
dans le cas où une défaillance survient dans les seconds moyens de conversion de puissance et que la quantité de charge du système de stockage est dans un état insuffisant, le système est configuré pour déconnecter l'un des trois coupeurs de ligne (10c) correspondant aux seconds moyens de conversion de puissance, et pour connecter les premiers moyens de conversion de puissance et le moteur de traction par courant alternatif par l'intermédiaire du sélecteur (9a) des premiers moyens de conversion,
dans le cas où une défaillance survient dans les premiers moyens de conversion de puissance et que la quantité de charge du système de stockage est dans un état insuffisant, le système est configuré pour déconnecter un autre coupeur de ligne (10b) correspondant aux premiers moyens de conversion de puissance, et pour connecter les seconds moyens de conversion de puissance et les moyens de générateur de courant alternatif par l'intermédiaire du sélecteur (9b) des seconds moyens de conversion, et
dans le cas où une défaillance survient dans les premiers moyens de conversion de puissance et que la quantité de charge du système de stockage est dans un état suffisant, le système est configuré pour déconnecter un autre coupeur de ligne (10b) correspondant aux premiers moyens de conversion de puissance, et pour connecter les seconds moyens de conversion de puissance et le moteur de traction par courant alternatif par l'intermédiaire du sélecteur (9b) des seconds moyens de conversion,
de sorte que le système est en mesure de stocker de l'énergie dans le système de stockage via des moyens de conversion de puissance fonctionnant de manière saine lorsque l'un ou l'autre des deux moyens de conversion de puissance connaît une défaillance, et pour entraîner le moteur de traction par courant alternatif en utilisant l'énergie stockée.
